# NEUE EUROPÄISCHE PATENTSCHRIFT

(11) **EP 1 443 233 B2**
(45) Veröffentlichungstag und Bekanntmachung des Hinweises auf die Entscheidung über den Einspruch: **29.07.2020**
(45) Hinweis auf die Patenterteilung: 29.09.2010
(21) Anmeldenummer: 04002150.3
(22) Anmeldetag: 30.01.2004
(51) Int. Cl.: F16D 13/58

(54) **Reibungskupplung**
Friction clutch
Embrayage à friction

(30) Priorität: 01.02.2003 DE 10304058
(43) Veröffentlichungstag der Anmeldung: 04.08.2004
(73) Patentinhaber: ZF Friedrichshafen AG, 88046 Friedrichshafen (DE)
(72) Erfinder: Kleuker, Christoph, 97469 Gochsheim (DE); Vogt, Sebastian, 97616 Bad Neustadt (DE); Hirschmann, Frank, 97464 Niederwern (DE); Bindig, Sebastian, 97503 Gädheim (DE); Knorr, Sebastian, 04828 Bennewitz (DE)

(56) Entgegenhaltungen:
- EP-A- 0 249 469
- EP-A1- 0 185 176
- EP-A1- 0 845 615
- EP-A1- 1 275 867
- FR-A- 2 834 024
- FR-A1- 2 745 051
- FR-A1- 2 749 628
- GB-A- 2 186 039
- US-A- 4 579 210
- US-A- 5 265 709
- US-A- 5 586 634

## Beschreibung

Die vorliegende Erfindung betrifft eine Reibungskupplung, welche eine Gehäuseanordnung, eine Anpressplatte, welche mit der Gehäuseanordnung zur gemeinsamen Drehung um eine Drehachse und in Richtung der Drehachse bezüglich dieser verlagerbar gekoppelt ist, ein Einrückersystem zur Erzeugung einer Einrückkraft und eine Kraftbeaufschlagungsanordnung zur Übertragung der Einrückkraft auf die Anpressplatte aufweist.

Bei Kupplungen vom Normal-Offen-Typ, wie sie heute bei Ein- und Doppelkupplungssystemen Anwendung finden, wird der Kupplungsbereich nicht durch einen Kraftspeicher in einen Einrückzustand vorgespannt, sondern muss durch Erzeugung einer Betätigungskraft beispielsweise vermittels eines Einrückersystems aktiv in den Einrückzustand gebracht werden. Da jedoch übliche Einrückersysteme oftmals nur einfach wirken, d.h. in der Einrückrichtung wirkend ausgeführt sind, muss die Rückstellkraft für das Einrückersystem, d.h. zum Öffnen der Kupplung von Lüftkrafterzeugungseinrichtungen, wie z.B. von Tangentialblattfedern, bereitgestellt werden. Die Tangentialblattfedern werden hierbei so ausgelegt, dass die Rückstellkräfte bei offener Kupplung gerade noch ausreichen, die Kupplung sicher zu öffnen bzw. im ausgekuppelten Zustand zu halten, um die auf das Einrückersystem und die Einrücklager im eingekuppelten, d.h. eingerückten Zustand wirkenden Kräfte möglichst gering zu halten. Dementsprechend ist jedoch auch das Startniveau der Einrückkraft sehr gering, was problematisch ist, da derartige Kupplungssysteme im vorderen Bereich der Einrückstrecke (zu Beginn des Einrückens) schwer regelbar sind, da in diesem Bereich kleine Kraftänderungen auf dem niedrigen Kraftniveau im Einrückersystem bereits zu großen Wegänderungen am Einrücklager führen.

Die US-5927418 offenbart eine Reibungskupplung mit einer in Richtung Einrücken vorgespannten Membranfeder, welche eine Anpressplatte beaufschlagt. Ein Ausrückermechanismus erzeugt eine Ausrückkraft, welche die Reibungskupplung normalerweise offen hält.

Die nachveröffentliche EP 140071671 zeigt eine Doppelkupplung mit Kupplungsbereichen des Normal-Offen-Typs. Jeder Kupplungsbereich umfasst eine nur in einer axialen Richtung bezüglich eines Gehäuses abgestützte Kraftbeaufschlagungsanordnung.

Es ist eine Aufgabe der vorliegenden Erfindung, eine Reibungskupplung vorzusehen, welche im Anfangsbereich der Einrückstrecke besser regelbar ist.

Diese Aufgabe wird gemäß der vorliegenden Erfindung gelöst durch eine Reibungskupplung gemäß Anspruch 1. Diese umfasst eine Gehäuseanordnung, eine Anpressplatte, welche mit der Gehäuseanordnung zur gemeinsamen Drehung um eine Drehachse und in Richtung der Drehachse bezüglich dieser verlagerbar gekoppelt ist, ein Einrückersystem zur Erzeugung einer Einrückkraft und eine Kraftbeaufschlagungsanordnung zur Übertragung der Einrückkraft auf die Anpressplatte, wobei die Kraftbeaufschlagungsanordnung vorgespannt ist, um eine der am Beginn eines Einrückvorgangs wirkenden Einrückkraft entgegenwirkende Reaktionskraft bereitzustellen. Durch die Vorspannung der Kraftbeaufschlagungsanordnung ist es in einfacher Weise möglich, eine Reibungskupplung vorzusehen, welche im Anfangsbereich der Einrückstrecke besser regelbar ist. Wird darüber hinaus eine Kraftbeaufschlagungsanordnung verwendet, welche beispielsweise ein im wesentlichen neutrales oder degressives Kraft-Weg-Verhalten aufweist, ist es darüber hinaus möglich, das Startniveau der Einrückkraft anzuheben, ohne das Kraftmaximum am Ende der Einrückstrecke so weit anzuheben, dass zur Betätigung der Kupplung eine erhöhte Betätigungskraft aufgewendet werden muss oder die Lebensdauer des Einrücklager verringert wird.

Abhängig vom Aufbau der Kupplung ist die Kraftbeaufschlagungsanordnung entweder in ihrem radial äußeren Randbereich bezüglich der Gehäuseanordnung und in einem radial weiter innen gelegenen Bereich bezüglich der Anpressplatte abgestützt, oder in ihrem radial äußeren Randbereich bezüglich der Anpressplatte und in einem radial weiter innen gelegenen Bereich bezüglich der Gehäuseanordnung abgestützt, wobei der jeweilige Abstützpunkt bezüglich der Gehäuseanordnung als Drehpunkt bzw. Drehlager der Kraftbeaufschlagungsanordnung dient.

Wenn als Kraftbeaufschlagungsanordnung beispielsweise eine Membranfeder verwendet wird, kann die Vorspannung der Kraftbeaufschlagungsanordnung dadurch erreicht werden, dass eine Membranfeder mit einer von der Härtestellung (Fertigungslage) abweichenden Einbaulage verwendet wird, d.h. das die Membranfeder vor, während oder nach dem Einbau in die Kupplungen vom Normal-Offen-Typ beispielsweise über entsprechend ausgebildete Anschläge so im Kupplungsgehäuse verspannt wird, dass sie die gewünschte Reaktionskraft bereitstellt.

Um jedoch zu verhindern, dass eine Kraftbeaufschlagungsanordnung mit einer von der Einbaulage abweichenden Fertigungslage von ihrem gehäuseseitigen Drehpunkt abheben kann, was dadurch zustande käme, dass die Kraftbeaufschlagungsanordnung bestrebt ist, sich in eine kraftlose Position zu bewegen, kann die Kraftbeaufschlagungsanordnung durch einen Gegenhalt an ihrem Drehpunkt festgehalten werden. Erfindungsgemäß ist daher vorgesehen, dass die Kraftbeaufschlagungsanordnung bezüglich der Gehäuseanordnung in beiden axialen Richtungen abgestützt ist, was eine definierte Festlegung der Kraftbeaufschlagungsanordnung im Abstützbereich an der Gehäuseanordnung ermöglicht.

Um in einfacher Art und Weise die Kraftbeaufschlagungsanordnung am Gehäuse abstützen zu können, insbesondere in dem Falle, in dem diese Abstützung im radial äußeren Bereich der Kraftbeaufschlagungsanordnung erfolgt, wird vorgeschlagen, dass die Abstützung in einer ersten axialen Richtung über ein an einem Bodenbereich des Gehäuses sich abstützendes erstes Abstützelement erfolgt. Die Abstützung in der zweiten axialen Richtung kann beispielsweise über an dem Gehäuse integral vorgesehene, durch Umformung des Gehäuses gebildete Abstützbereiche erfolgen.

Bei einer alternativen Variante ist es möglich, dass die Abstützung in einer zweiten axialen Richtung über ein mit dem Gehäuse axial fest verbundenes zweites Abstützelement erfolgt. Dieses zweite Abstützelement kann beispielsweise mit dem Gehäuse durch Formschluss, durch Materialschluss, insbesondere Verschweißung, oder unter Einsatz von Befestigungselementen, wie z.B. Nietbolzen, Schraubbolzen oder dergleichen, erfolgen.

Bei einer weiteren alternativen Variante zur beidseitigen axialen Abstützung der Kraftbeaufschlagungsanordnung an dem Gehäuse wird vorgeschlagen, dass das Gehäuse ein erstes Gehäusebauteil umfasst, an dem die Abstützung in einer ersten axialen Richtung erfolgt, und ein zweites Gehäusebauteil umfasst, an dem die Abstützung in einer zweiten axialen Richtung erfolgt. Dabei kann das erste Gehäusebauteil am zweiten Gehäusebauteil getragen sein oder die beiden Gehäusebauteile können beispielsweise über gemeinsame Befestigungselemente an einem gemeinsamen Träger fest getragen sein.

Wie bereits angesprochen, kann die Vorspannung der Kraftbeaufschlagungsanordnung beispielsweise dadurch erreicht werden, dass die Kraftbeaufschlagungsanordnung bezüglich des Kupplungsgehäuse verspannt wird, d.h. dass die Kraftbeaufschlagungsanordnung so in einem maximal entspannten Zustand beispielsweise durch eine Abstützung an einer Vorspannanschlaganordnung in einem Vorspannzustand gehalten wird, dass sie die gewünschte Reaktionskraft bereitstellt. Erfindungsgemäß kann dabei vorgesehen sein, dass die Vorspannanschlaganordnung vom Einrückersystem gebildet wird, d.h., dass der Vorspannzustand durch die Anlage der Kraftbeaufschlagungsanordnung am Kupplungsgehäuse und am Einrückersystem erreicht wird, oder dass die Vorspannanschlaganordnung an der Gehäuseanordnung vorgesehen ist, d.h., dass der Vorspannzustand durch die Anlage der Kraftbeaufschlagungsanordnung an wenigstens zwei voneinander beabstandeten Bereichen des Kupplungsgehäuses erreicht wird.

Dabei kann beispielsweise vorgesehen sein, dass die Vorspannanschlaganordnung einen radial äußeren Randbereich der Kraftbeaufschlagungsanordnung abstützt, wobei die Abstützung beispielsweise über Materialvorsprünge am Gehäuse oder so genannte Drahtringe erfolgen kann, welche als Auflager bzw. Anschläge für die Kraftbeaufschlagungsanordnung dienen.

Weiterhin kann vorgesehen sein, dass die Vorspannanschlaganordnung in einem gegenüber dem äußeren Randbereich der Kraftbeaufschlagungsanordnung radial weiter innen gelegenen Bereich zur Abstützung vorgesehen ist. Diesbezüglich sind wiederum beispielsweise Materialvorsprünge am Gehäuse oder zwischen der Kraftbeaufschlagungsanordnung und dem Gehäuse vorgesehene Drahtringe denkbar, wobei zusätzliche Vorspannelemente beispielsweise in der Form von Spannbolzen vorgesehen sein können, um die Kraftbeaufschlagungsanordnung vorzuspannen.

Erfindungsgemäß kann weiterhin vorgesehen sein, dass die Abstützung innerhalb des Bereichs erfolgt, in welchem die Anpressplatte an der Kraftbeaufschlagungsanordnung abgestützt ist.

Weiterhin kann vorgesehen sein, dass die Kraftbeaufschlagungsanordnung wenigstens ein Membranfederelement umfasst oder/und dass die Kraftbeaufschlagungsanordnung mehrere Hebelelemente umfasst, welche in Richtung Ausrücken vorgespannt sind, wobei den Hebelelementen Vorspannelemente zugeordnet sein können, welche die Hebelelemente in Richtung Ausrücken vorspannen.

Weiterhin kann vorgesehen sein, dass die Reibungskupplung eine Doppelkupplung mit zwei Kupplungsbereichen ist, wobei die Kraftbeaufschlagungsanordnung in dem einen Kupplungsbereich in ihrem radial äußeren Randbereich bezüglich der Gehäuseanordnung und in einem radial weiter innen gelegenen Bereich bezüglich der Anpressplatte abgestützt ist und wobei die Kraftbeaufschlagungsanordnung in dem anderen Kupplungsbereich in ihrem radial äußeren Randbereich bezüglich der Anpressplatte und in einem radial weiter innen gelegenen Bereich bezüglich der Gehäuseanordnung abgestützt ist.

Die Erfindung wird nachfolgend mit Bezug auf die beigefügten Zeichnungen detailliert beschrieben. Es zeigen:
- Fig. 1: eine Teillängsschnittansicht einer Doppelkupplung;
- Fig. 2: eine Ansicht entsprechend Fig. 1 einer weiteren Ausführungsform einer Doppelkupplung in Übereinstimmung mit der Erfindung;
- Fig. 3: eine Ansicht entsprechend Fig. 1 einer weiteren Ausführungsform einer Doppelkupplung in Übereinstimmung mit der Erfindung;
- Fig. 4: eine Ansicht entsprechend Fig. 1 einer weiteren Ausführungsform einer Doppelkupplung in Übereinstimmung mit der Erfindung;
- Fig. 5: eine vergrößerte Teillängsschnittansicht gemäß einer weiteren Ausführungsform einer Kupplung in Übereinstimmung mit der Erfindung;
- Fig. 6: ein der Fig. 1 entsprechende Darstellung einer Doppelkupplung mit einer alternativen Variante der beidseitigen axialen Abstützung einer Kraftbeaufschlagungsanordnung;
- Fig. 7 - 9: verschiedene Varianten eines ringartigen Abstützelements;
- Fig. 10: eine der Fig. 6 entsprechende Ansicht mit einer weiteren Alternative zur beidseitigen axialen Abstützung einer Kraftbeaufschlagungsanordnung;
- Fig. 11: eine perspektivische Ansicht eines bei der Variante der Fig. 10 eingesetzten Axialabstützelements;
- Fig. 12: eine perspektivische Ansicht des bei der Variante der Fig. 10 eingesetzten Gehäuses;
- Fig. 13: eine weitere der Fig. 6 entsprechende Ausgestaltungsvariante mit alternativer beidseitiger Axialabstützung;
- Fig. 14 und 15: perspektivisch dargestellt zwei Gehäuseteile der Ausgestaltungsform der Fig. 13;
- Fig. 16 und 17: eine perspektivische Darstellung zweier Gehäuseteile gemäß einer alternativen Ausgestaltungsform;
- Fig. 18: eine weitere der Fig. 6 entsprechende Ansicht mit einer weiteren Variante der beidseitigen axialen Abstützung einer Kraftbeaufschlagungsanordnung;
- Fig. 19: eine perspektivische Ansicht eines bei der Ausgestaltungsform der Fig. 18 eingesetzten Gehäuseteils;
- Fig. 20: eine perspektivische Ansicht eines weiteren bei der Ausgestaltungsform der Fig. 18 eingesetzten Gehäuseteils.

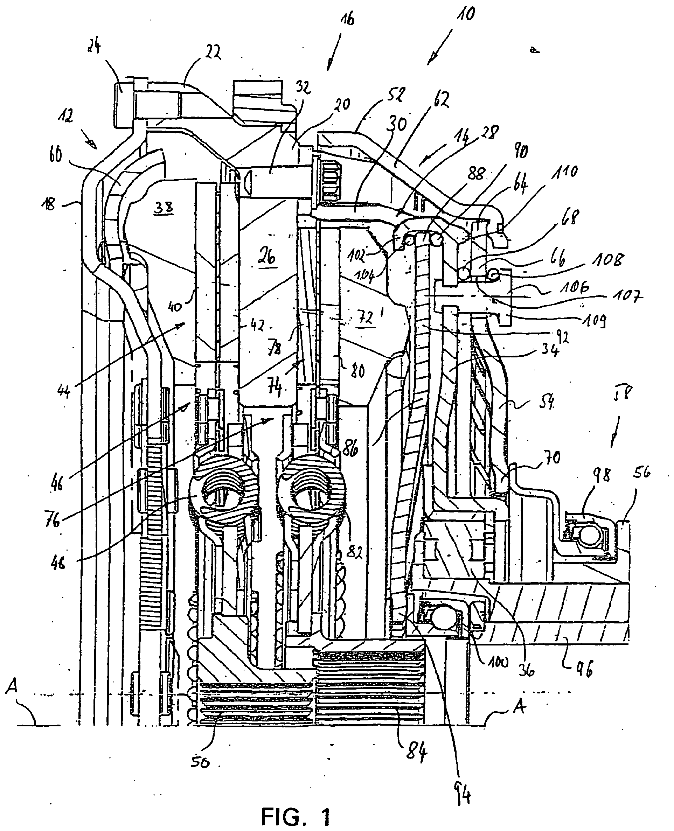

Fig. 1 zeigt eine in einem Antriebsstrang zwischen einer Antriebseinheit und einem Getriebe angeordnete Doppelkupplung 10. Die Doppelkupplung 10 umfasst im Wesentlichen zwei Kupplungsbereiche 12, 14, durch welche wahlweise ein Drehmoment von einer Antriebswelle, beispielsweise Kurbelwelle einer Brennkraftmaschine, auf eine von zwei zueinander koaxial angeordneten Getriebeeingangswellen übertragen werden kann.

Die Doppelkupplung 10 weist eine allgemein mit 16 bezeichnete und aus mehreren Teilen zusammengesetzte Gehäuseanordnung auf. Ein scheibenartiges Teil 18, das als Schwungrad, Sekundärmasse eines Zweimassenschwungrads, Mitnehmerblech o. dgl. ausgebildet sein kann, sorgt für die Drehankopplung der Doppelkupplung 10 an die bereits angesprochene Antriebswelle, beispielsweise einer Kurbelwelle einer Brennkraftmaschine. Ein Plattenteil 20 ist in einem radial äußeren, sich im Wesentlichen axial erstreckenden Abschnitt 22 über eine Mehrzahl von Schraubenbolzen 24 an das scheibenartige Teil 18 angebunden. Mit einem nach radial innen greifenden ringartigen Abschnitt 26 (nachfolgend als Widerlagerplatte 26 bezeichnet) bildet das Plattenteil 20 für die beiden nachfolgend noch genauer erläuterten Kupplungsbereiche 12, 14 der Doppelkupplung 10 einen Widerlagerbereich. Ein Gehäuseteil 28 ist mit seinem radial äußeren, sich ebenfalls im Wesentlichen axial erstreckenden Abschnitt 30 vermittels einer Mehrzahl von Schraubenbolzen 32 mit dem Plattenteil 20 fest verbunden. Ein nach radial innen greifender ringartiger Abschnitt bzw. Bodenbereich 34 des Gehäuseteils 28 dient zur Abstützung bzw. Drehlagerung an einem Getriebegehäuse o. dgl. über ein Lager 36.

Der erste Kupplungsbereich 12 der Doppelkupplung 10 umfasst eine Anpressplatte 38, die an einer axialen Seite der Widerlagerplatte 26 angeordnet ist. Zwischen dieser Anpressplatte 38 und der Widerlagerplatte 26 liegt die Reibbeläge 40, 42 umfassende Reibflächenanordnung 44 einer Kupplungsscheibe 46 des ersten Kupplungsbereichs 12. Im dargestellten Ausgestaltungsfall ist die Kupplungsscheibe 46 mit einem Torsionsschwingungsdämpfer 48 ausgebildet. In ihrem radial inneren Bereich ist die Kupplungsscheibe 46 über eine Nabe 50 derselben zur drehfesten Ankopplung an eine erste nicht dargestellte Antriebswelle bzw. Getriebeeingangswelle ausgebildet.

In ihrem radial äußeren Bereich ist die Anpressplatte 38 des ersten Kupplungsbereichs 12 mit der Widerlagerplatte 26 beispielsweise über nicht dargestellte Tangentialblattfedern o. dgl., die auch eine Lüftkraft erzeugen können, drehfest, bezüglich dieser jedoch in Richtung der Drehachse A der Doppelkupplung 10 bewegbar gekoppelt. Über eine Kraftübertragungsanordnung 52 und ein Kraftbeaufschlagungselement 54 kann eine Einrückkraft von einem ersten Betätigungselement 56 des Betätigungsmechanismus 58 auf die Anpressplatte 38 des ersten Kupplungsbereichs 12 übertragen werden. Die Kraftübertragungsanordnung 52 umfasst zwei topfoder schalenartig ausgebildete Kraftübertragungselemente 60, 62, welche die Widerlagerplatte 26 überbrücken und in ihrem radial äußeren Bereich miteinander verbunden sind. Das Kraftübertragungselement 60 kann die Anpressplatte 38 unter Zwischenlagerung einer nicht dargestellten Verschleißnachstellvorrichtung beaufschlagen. Das Kraftbeaufschlagungselement 54 ist in seinem radial äußeren Bereich 64 an dem Kraftübertragungselement 62 abgestützt und ist in seinem radial weiter innen liegenden Bereich 66 über einen Drahtring 68 o. dgl. an der Außenseite des topfartig ausgebildeten und mit der Widerlagerplatte 26 verbundenen Gehäuseteils 28, d.h. dem radial nach innen greifenden Abschnitt 34, abgestützt und wird in seinem radial inneren Bereich 70 von dem Betätigungselement 56 des Betätigungsmechanismus 58 beaufschlagt. Das Kraftbeaufschlagungselement 54 kann beispielsweise als Membranfeder ausgebildet sein, kann jedoch beispielsweise auch eine Kraftübertragungshebelanordnung mit mehreren in Umfangsrichtung verteilt angeordneten Hebelelementen umfassen.

Der zweite Kupplungsbereich 14 umfasst an der anderen axialen Seite der Widerlagerplatte 26 ebenfalls eine Anpressplatte 72, die mit der Widerlagerplatte 26 beispielsweise wiederum durch Tangentialblattfedern o. dgl., die auch eine Lüftkraft erzeugen können, drehfest, jedoch in Richtung der Achse A bewegbar verbunden ist. Zwischen Anpressplatte 72 und der Widerlagerplatte 26 liegt die Reibflächenanordnung 74 einer Kupplungsscheibe 76 des zweiten Kupplungsbereichs 14 mit ihren Reibbelägen 78, 80. Auch die Kupplungsscheibe 76 weist im dargestellten Ausgestaltungsfall einen Torsionsschwingungsdämpfer 82 auf. In ihrem radial inneren Bereich ist die Kupplungsscheibe 76 über eine Nabe 84 zur drehfesten Ankopplung an einer zur ersten (nicht gezeigten) Getriebeeingangswelle im Wesentlichen konzentrisch angeordneten zweiten (nicht gezeigten) Getriebeeingangswelle ausgebildet.

Ein Kraftbeaufschlagungselement 86 des zweiten Kupplungsbereichs 14 ist in seinem radial äußeren Bereich 88 über einen Drahtring 90 o. dgl. an der Innenseite des Gehäuseteils 28 abgestützt und kann in seinem radial weiter innen gelegenen Bereich 92 die Anpressplatte 72 beaufschlagen. Am radial inneren Ende 94 des Kraftbeaufschlagungselements 86 liegt ein Betätigungsbereich des zweiten Betätigungselements 96 des Betätigungsmechanismus 58 zur Beaufschlagung an. Auch das Kraftbeaufschlagungselement 84 kann als Membranfeder oder als eine Hebelanordnung ausgebildet sein. Bei einer Betätigung des zweiten Kupplungsbereichs 14 wird die Kupplungsscheibe 74 dieses Kupplungsbereichs 14 mit ihren Reibbelägen 78, 80 zwischen der Widerlagerplatte 26 und der Anpressplatte 72 geklemmt und damit eine Drehmomentübertragungsverbindung mittels der Nabe 84 zur anderen Getriebeeingangswelle hergestellt.

Die dargestellte Doppelkupplungsanordnung 10 ist vom Normal-Offen-Typ. Bei diesem Kupplungstyp dienen im Gegensatz zu Kupplungen vom Normal-Geschlossen-Typ die beiden Betätigungselemente 56, 96 des Betätigungsmechanismus 58 dazu, durch eine Beaufschlagung der verschiedenen Kraftbeaufschlagungselemente 54, 86 jeweils eine Einrückkraft zu erzeugen, mit welcher die Anpressplatten 38 bzw. 72 zum Einrücken des jeweiligen Kupplungsbereichs in Richtung der Widerlagerplatte 26 gepresst werden, wohingegen die Rückstellkraft für den Betätigungsmechanismus 58, d.h. die zum Öffnen der Kupplung notwendige Kraft, von der Kupplung selbst aufgebracht werden muss. Dabei sind die Kraftbeaufschlagungselemente 54, 86 der Kupplung vom Normal-Offen-Typ jedoch so ausgeführt, dass sie auf einem möglichst niedrigen Kraftniveau arbeiten. Bei den bekannten Lösungen wird die Rückstellkraft deswegen hauptsächlich von den nicht gezeigten Tangentialblattfedern bzw. Belagfedern erzeugt, welche hierbei so ausgelegt sind, dass die Rückstellkräfte bei offener Kupplung gerade noch ausreichen, die Kupplung sicher offen zu halten. Dementsprechend ist auch das Startniveau der Einrückkraft sehr niedrig, was problematisch ist, da derartig ausgeführte Systeme im vorderen Bereich der Einrückstrecke schwer regelbar sind, da dort kleine Kraftänderungen auf dem niedrigen Niveau im Einrücksystem bereits zu großen Wegänderungen am jeweiligen Einrücklager 98, 100 des jeweiligen Betätigungselements 56, 96 führen. Aus diesem Grunde wird erfindungsgemäß das Startniveau der Einrückkraft angehoben, ohne jedoch, wenn möglich, entsprechend das Kraftmaximum am Ende der Einrückstrecke anzuheben, so dass ein Abfall der Einrücklagerlebensdauer vermieden werden kann und eine Umgestaltung des Betätigungsmechanismus 58 zur Erzielung höherer Einrücckräfte (maximal erreichbarer Einrückkräfte) nicht notwendig ist.

Bei der in Fig. 1 dargestellten Ausführungsform der Erfindung sind aus diesem Grund die Kraftbeaufschlagungselemente 54, 86 mit einer von der Härtestellung (Fertigungslage) abweichenden Einbaulage in die Doppelkupplung 10 eingebaut. Durch diese Anordnung kann beispielsweise mit einer näherungsweise standardmäßigen Membranfeder eine Erhöhung des Startwerts der Einrückkraft erreicht werden. Um jedoch ein Abheben der Kraftbeaufschlagungselemente 54, 86 mit einer von der Einbaulage abweichenden Fertigungslage von ihrem gehäuseseitigen Drehpunkt, d.h. dem Drahtring 68 bzw. 86 zu verhindern, was durch das Bestreben der Kraftbeaufschlagungselemente 54, 86, sich in eine kraftlose Position zu bewegen, zustande käme, sind gemäß dieser Ausführungsform Gegenhalter vorgesehen, welche die Kraftbeaufschlagungselemente 54, 86 an ihrem jeweiligen Drehpunkt festhalten.

Wie in Fig. 1 zu sehen ist, ist der radial äußere Bereich 88 des Kraftbeaufschlagungselements 86 des zweiten Kupplungsbereichs 14 zwischen dem als Drehpunkt wirkenden Drahtring 90 und einem weiteren Drahtring 104, welcher von einer nach innen gebogenen Lasche 102 des horizontal verlaufenden Abschnitts 30 des Gehäuseteils 28 fixiert ist, bezüglich der Gehäuseanordnung 16 in beiden axialen Richtungen abgestützt, um ein Abheben des Kraftbeaufschlagungselements 86 von ihrem Drehpunkt, dem Drahtring 90, zu verhindern. Die Vorspannung des Kraftbeaufschlagungselements 86 wird bei diesem Ausführungsbeispiel entweder durch die Anlage des Kraftbeaufschlagungselements 86 an der Innenseite des nach radial innen greifenden ringartigen Abschnitts 34 des Gehäuseteils 28 bzw. die Anlage des radial inneren Endes 94 des Kraftbeaufschlagungselements 86 am Einrücklager 100 erzeugt, welche jeweils das Kraftbeaufschlagungselement in der Richtung weg vom Betätigungsmechanismus 58 drücken.

Zur Festlegung bzw. Verspannung des Kraftbeaufschlagungselements 54 des ersten Kupplungsbereichs 12 dient ein an dem radial nach innen greifenden Abschnitt 34 des Gehäuseteils 28 beispielsweise durch Vernieten festgelegter Distanzbolzen 106, welcher eine Öffnung 107 des Kraftbeaufschlagungselements 54 durchgreift und über einen an dem Kopf 109 des Distanzbolzens 106 anliegenden Drahtring 108 ein Abheben des Kraftbeaufschlagungselements 54 von dem als Drehpunkt wirkenden Drahtring 68 verhindert. Zusätzlich ist das Gehäuseteil 28 gemäß dieser Ausführungsform in seinem, dem radial äußeren Bereich 64 des Kraftbeaufschlagungselements 54 nahen Bereich, d.h. im Übergangsbereich von dem sich im Wesentlichen axial erstreckenden Abschnitt 30 zu dem sich nach radial innen erstreckenden ringartigen Abschnitt 34, mit einem als Abstützelement dienenden erhöhten Bereich 110 versehen, durch welchen das Kraftbeaufschlagungselement 54 in seiner Einbaulage gehalten wird. Gemäß dieser Ausführungsform liegt also das Kraftbeaufschlagungselement 54 mit seinem radial äußeren Bereich 64 an dem erhöhten Bereich 110 an und wird mittels des Distanzbolzens 106 und des Drahtrings 108 in Richtung auf den Gehäuseabschnitt 34 zu gedrückt, wodurch die Vorspannung erzeugt wird.

Es sei darauf hingewiesen, dass die vorangehend beschriebene Vorspannung der Kraftbeaufschlagungselemente in der Form einer Membranfeder und die Maßnahmen zur Verhinderung des Abhebens der Kraftbeaufschlagungselemente 54, 86 von ihren jeweiligen Drehpunkten selbstverständlich auch bei einer Einzelkupplung eingesetzt werden können. Des Weiteren kann die erfindungsgemäße Ausgestaltung auch bei Reibungskupplungen verwendet werden, welche ein zusätzliches, an dem jeweiligen Kraftbeaufschlagungselement angreifendes Gegenkrafterzeugungselement beispielsweise in Form einer zwischen dem sich nach radial innen greifenden ringartigen Abschnitt 34 des Gehäuseteils 28 und dem jeweiligen Kraftbeaufschlagungselement 54 bzw. 86 vorgesehenen (nicht dargestellten) Gegenkrafterzeugungselement, beispielsweise in Form einer Zusatzfeder, aufweisen.

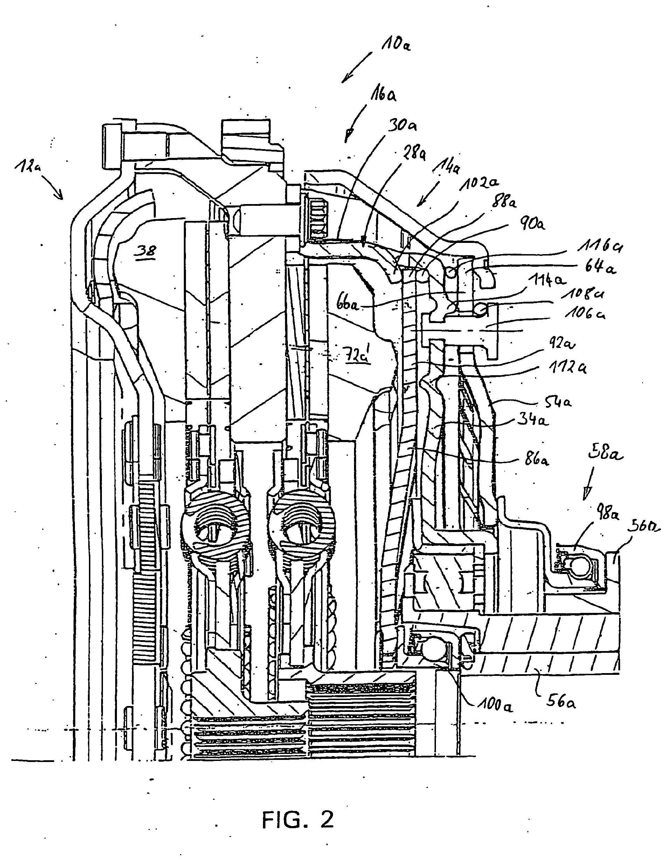

Eine Abwandlung der in Fig. 1 beschriebenen Reibungskupplungsanordnung ist in Fig. 2 dargestellt, wobei Bauelemente, die solchen der ersten Ausführungsform entsprechen, mit den gleichen Bezugszeichen, jeweils vermehrt um den Buchstaben "a", versehen sind. Es wird im Folgenden nur auf die Unterschiede eingegangen, so dass im übrigen auf die Beschreibung des ersten Ausführungsbeispiels verwiesen sei.

Diese zweite Ausführungsform unterscheidet sich gegenüber der Ausführungsform der Fig. 1 im Wesentlichen dadurch, dass die Fixierung des radial äußeren Bereichs 88a des Kraftbeaufschlagungselements 86a des zweiten Kupplungsbereichs 14a in beiden axialen Richtungen lediglich durch den als Drehpunkt dienenden Drahtring 90a und eine Lasche 102a erfolgt, welche an dem sich im Wesentlichen axial erstreckenden Abschnitt 30a des Gehäuseteils 28a ausgebildet ist, unter Weglassung des Drahtrings 104. Weiterhin weist in dieser Ausführungsform der radial nach innen greifende ringartige Abschnitt 34a des Gehäuseteils 28 im Bereich der Anpressplatte 72a eine in Richtung zur Anpressplatte 72a hin vorstehende Sicke 112a auf, durch welche das Kraftbeaufschlagungselement 86a in Einbaulage gehalten bzw. vorgespannt wird.

Als Drehpunkt für das Kraftbeaufschlagungselement 54a des ersten Kupplungsbereichs 12a dient gemäß dieser Ausführungsform eine Sicke 114a, welche den Drahtring 68 der ersten Ausführungsform ersetzt, was eine axial kürzere Bauweise ermöglicht. Darüber hinaus weist die Gehäuseanordnung 28a in dieser Ausführungsform in ihrem Übergangsbereich von dem sich im Wesentlichen axial erstreckenden Abschnitt 30a zu dem sich nach radial innen erstreckenden ringartigen Abschnitt 34a keinen erhöhten Bereich 110 auf, wie in der ersten Ausführungsform, sondern einen Drahtring 116a, welcher das Kraftbeaufschlagungselement 54a in der Einbaulage hält. Wie schon in der ersten Ausführungsform ist auch in diese Ausführungsform einen Distanzbolzen 106a vorgesehen, welcher mittels eines Drahtrings 108a das Kraftbeaufschlagungselement 54a in Richtung auf ihren Drehpunkt zu (die Sicke 114a) vorspannt bzw. hält.

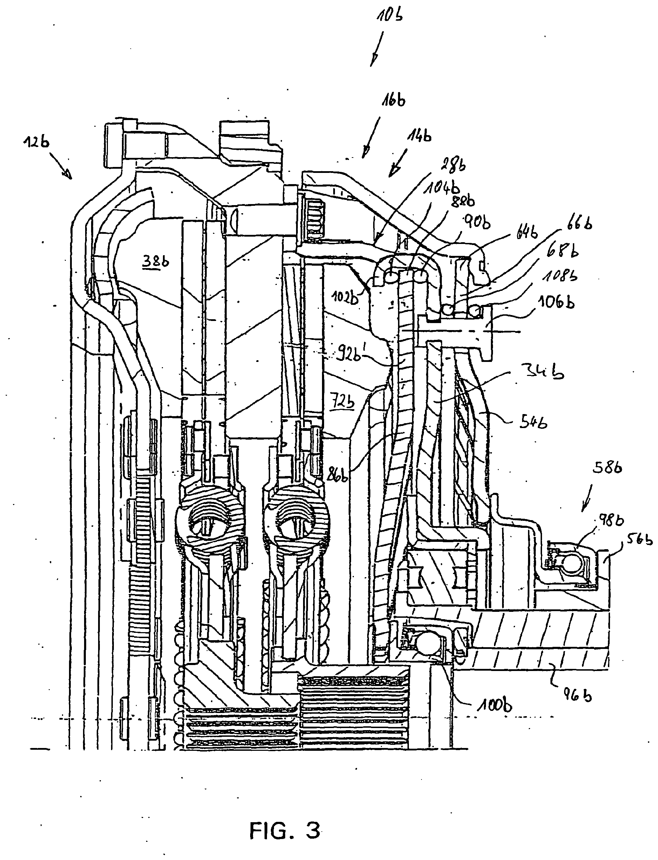

Fig. 3 zeigt eine weitere Abwandlung der in Fig. 1 beschriebenen Kupplungsanordnung, wobei Bauelemente, die solchen der ersten Ausführungsform entsprechen, mit entsprechenden Bezugszeichen, jeweils vermehrt um den Buchstaben "b" versehen sind. Es wird im Folgenden nur auf die Unterschiede eingegangen, so dass im übrigen auf die Beschreibung des ersten Ausführungsbeispiels verwiesen sei.

Bei der in Fig. 3 dargestellten Ausführungsform der Erfindung wird die Vorspannung der Kraftbeaufschlagungselemente 54b, 86b der linken und rechten Kupplungsbereiche 12b, 14b nicht durch die Anlage des jeweiligen Kraftbeaufschlagungselements 54b, 86b an Bereichen des Gehäuseteils 28b erreicht, sondern die Kraftbeaufschlagungselemente 54b, 86b werden durch den Betätigungsmechanismus 58b, insbesondere die Einrücklager 98b, 100b und die Betätigungselemente 56b, 96b, in der Einbaulage gehalten, wodurch diese Ausführungsform auch ohne eine Abstützung des radial äußeren Bereichs 64b des Kraftbeaufschlagungselements 54b am Gehäuseteil 28b, d.h. am erhöhten Bereich 110 in Fig. 1 bzw. dem Drahtring 90a in Fig. 2, auskommt.

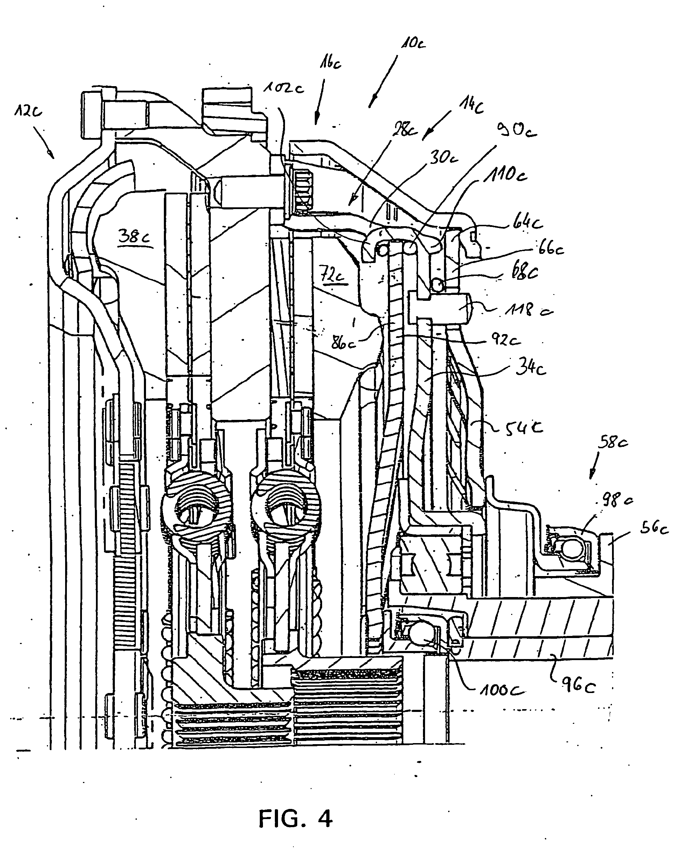

Eine weitere Abwandlung der in Fig. 1 beschriebenen Kupplungsanordnung ist in Fig. 4 dargestellt, wobei Bauelemente, die solchen der ersten Ausführungsform entsprechen, mit den gleichen Bezugszeichen, jeweils vermehrt um den Buchstaben "c", versehen sind. Es wird im Folgenden auf die Unterschiede eingegangen, so dass im übrigen auf die Beschreibung der ersten Ausführungsform verwiesen sei.

Bei dieser Ausführungsform werden die Kraftbeaufschlagungselemente 54c, 86c wie schon bei der Ausführungsform gemäß Fig. 3 durch die Einrücklager 98c, 100c des Betätigungsmechanismus 58c in Einbaulage gehalten. Da das Kraftbeaufschlagungselement 54c bei ausreichender Vorspannung durch das Einrücklager 98c des Betätigungsmechanismus 58c nicht vom Drahtring 68c abheben kann, entfällt bei dieser Ausführungsform sowohl der Drahtring 108 als auch der Distanzbolzen 106, welcher durch einen Führungsbolzen 118c ersetzt ist, der lediglich der Zentrierung des Drahtrings 68c und des Kraftbeaufschlagungselements 54c dient. Durch den erhöhten Bereich 110c im Übergangsbereich von dem sich im Wesentlichen axial erstreckenden Abschnitt 30c des Gehäuseteils 28c zu dem sich im Wesentlichen nach radial innen greifenden ringartigen Abschnitt 34c wird sichergestellt, dass sich das Kraftbeaufschlagungselement 54c mit seinem radial äußeren Randbereich 64c nicht zu weit in Richtung des (nicht dargestellten) Motors bewegt.

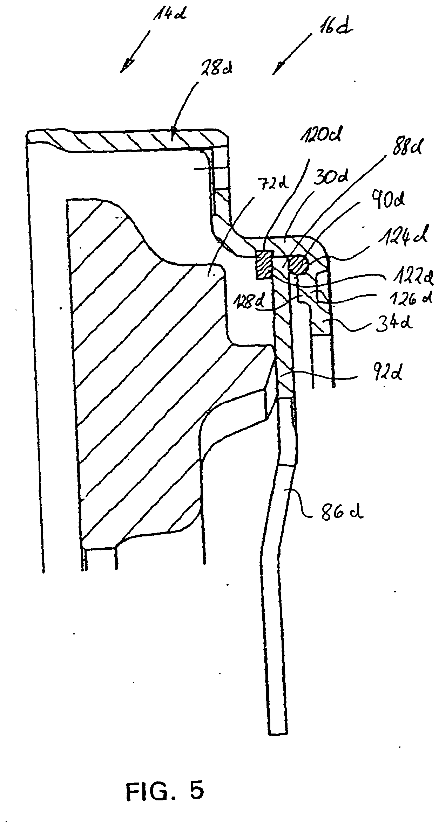

Fig. 5 zeigt eine weitere Ausführungsform der Kupplungsanordnung, wobei Bauelemente, die solchen der ersten Ausführungsform entsprechen, mit den gleichen Bezugszahlen, jeweils vermehrt um den Buchstaben "d" versehen sind. Es wird im Folgenden nur auf die Unterschiede eingegangen, so dass im übrigen auf die Beschreibung des ersten Ausführungsbeispiels verwiesen sei.

Diese Ausführungsform unterscheidet sich gegenüber der ersten Ausführungsform im Wesentlichen dadurch, dass anstelle der Lasche 102 und des Drahtrings 104 zur Abstützung des radial äußeren Bereichs 88 des Kraftbeaufschlagungselements 86 des zweiten Kupplungsbereichs 14 gegenüber dem Drahtring 90 (siehe Fig. 1) lediglich ein Spannring 122d vorgesehen ist, welcher in eine am Innenumfang des sich im Wesentlichen axial erstreckenden Abschnitts 30d ausgebildete Nut 120d eingesetzt ist, um ein Abheben des Kraftbeaufschlagungselements 86d von dem als Drehpunkt für das Kraftbeaufschlagungselement 86d dienenden Drahtring 90d zu verhindern, welcher in einer weiteren Nut 124d aufgenommenen ist.

Wie man der Figur 5 entnehmen kann, wird die Nut 124d bei dieser Ausgestaltungsform dadurch ausgebildet, dass ein Bereich 1 26d des radial nach innen greifenden ringartigen Abschnitts 34d von der Außenseite her (von rechts) eingestanzt ist, was eine entsprechende Auswölbung 128d an der Innenseite erzeugt, durch welche die Nut 124d ohne spanabhebende Bearbeitung ausgebildet werden kann. Es soll jedoch darauf hingewiesen werden, dass auch spanabhebende und sonstige denkbare Verfahren zur Ausbildung der Nut 124d wie auch der Nut 120d verwendbar sind.

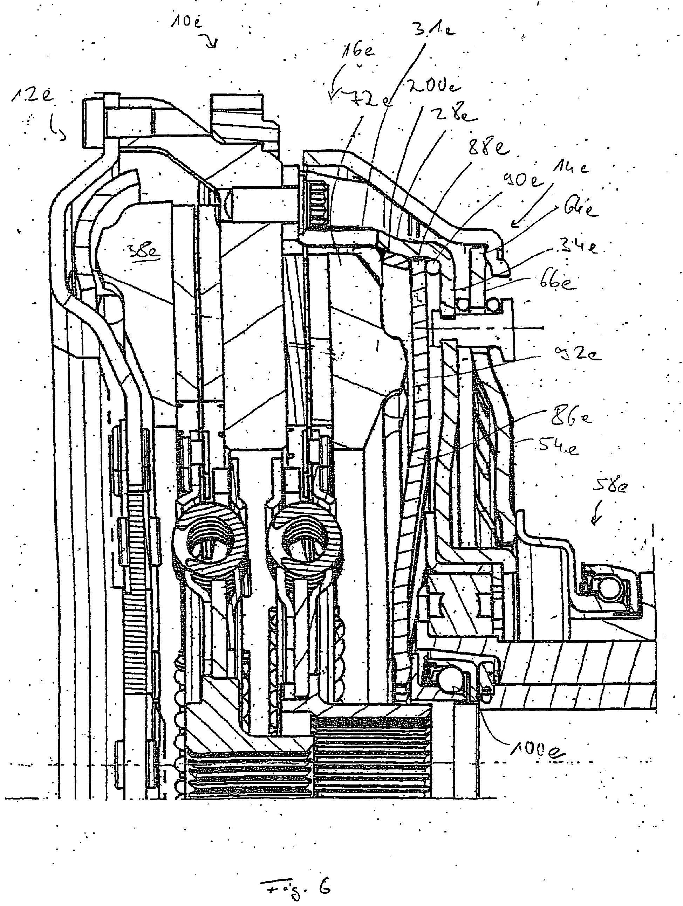

Eine weitere Ausgestaltungsform, die im Wesentlichen eine Abwandlung der vorangehend mit Bezug auf die Fig. 3 beschriebenen Variante darstellt, wird nachfolgend mit Bezug auf die Fig. 6 - 9 beschrieben. Bauteile, welche vorangehend bereits beschriebenen Bauteilen hinsichtlich Aufbau bzw. Funktion entsprechen, sind mit den gleichen Bezugszeichen unter Hinzufügung eines Anhangs "e" bezeichnet. Es sei darauf hingewiesen, dass mit Bezug auf diese und weitere noch nachfolgend beschriebene Ausgestaltungssvarianten im Wesentlichen nur auf die zu vorangehenden Varianten vorhandenen Unterschiede eingegangen wird, die primär im Bereich der axialen Abstützung des Kraftbeaufschlagungselements 86e in seinem radial äußeren Bereich gerichtet sind. Alle anderen Aspekte können so realisiert sein, wie in den verschiedenen vorangehend beschriebenen Ausgestaltungsformen gezeigt.

Man erkennt in Fig. 6, dass das Kraftbeaufschlagungselement 86e, beispielsweise als Membranfeder ausgebildet, in seinem radial äußeren Bereich 88e in einer ersten axialen Richtung, also in einer Richtung auf das Gehäuseteil 28e zu bzw. in dieses hinein, wieder über den als erstes Abstützelement hier wirkenden Drahtring 90e abgestützt ist, nämlich an dem Bodenbereich 34e des im Wesentlichen topfartig ausgestalteten Gehäuseteils 28e. Zur Abstützung in der anderen axialen Richtung, also in Richtung auf die Anpressplatte 72e zu, ist ein Abstützring 200e vorgesehen. Dieser liegt an der Innenseite des Umfangsbereichs 31 e des Gehäuseteils 28e an bzw. wird dort nach dem Einlegen des Drahtrings 90e und des Kraftbeaufschlagungselements 86e eingesetzt und, wie in Fig. 6 angedeutet, beispielsweise durch Verschweißung festgelegt. Da bei diesem Einbau das Kraftbeaufschlagungselement 86e vorgespannt und in seiner beabsichtigten Einbaulage gehalten wird, wird ein spielfreier Einbau erlangt.

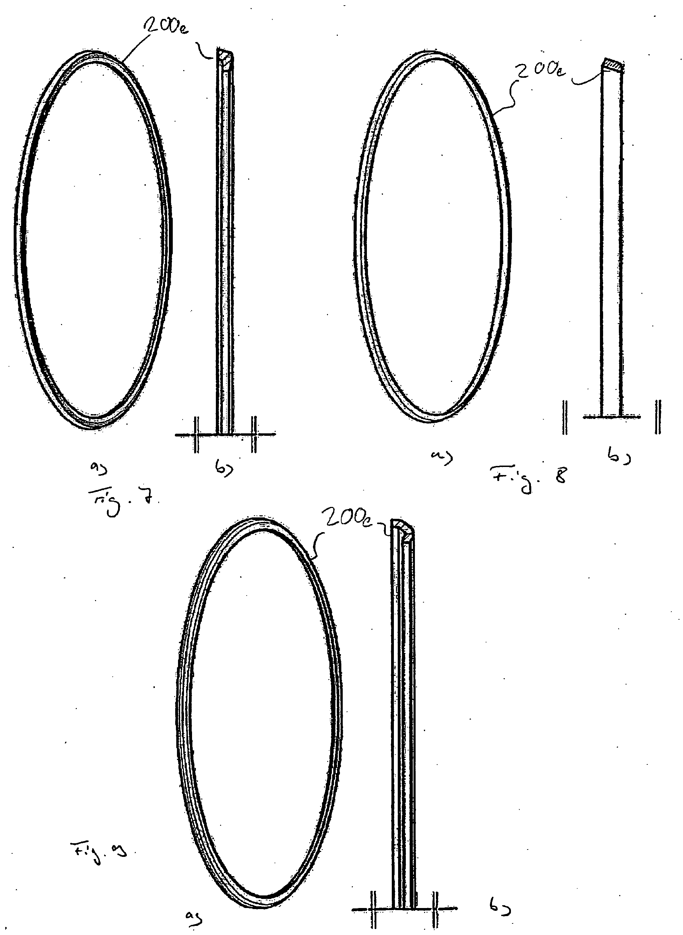

In den Fig. 7 - 9 sind verschiedene Varianten eines derartigen Abstützrings 200e jeweils in Perspektive und im Schnitt gezeigt. Die Formgebung dieses Abstützrings 200e kann selbstverständlich an die Formgebung des Gehäuseteils 28e angepasst sein und ebenso auch an die Formgebung bzw. die Bemessung des Kraftbeaufschlagungselements 86e. Der Abstützring 200e kann beispielsweise durch Tiefziehen, Walzen, Schweißen und Kalibrieren, oder durch Drehen hergestellt werden.

Das Widerlager im radial weiter innen gelegenen Bereich bildet auch bei dieser Ausgestaltungsvariante beispielsweise wieder das Einrücklager 100e des Betätigungsmechanismus 58e, an welchem die radial innen liegenden Endbereiche des Kraftbeaufschlagungselements 86e unter Vorspannung anliegen können, da ein axiales Ausweichen im radial äußeren Bereich 88e nicht möglich ist.

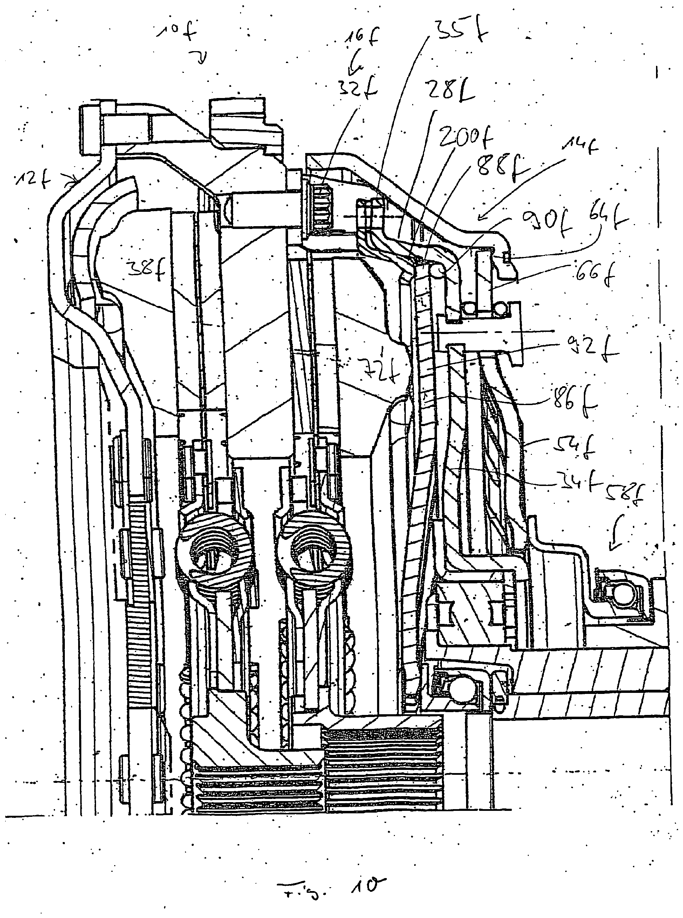

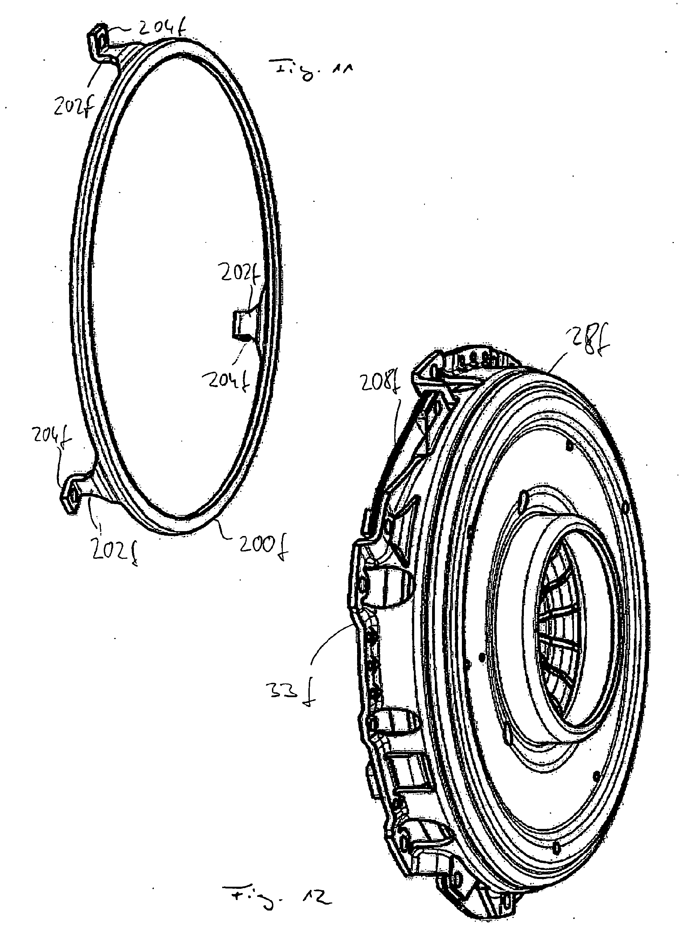

Eine weitere Variante ist in den Fig. 10 - 12 gezeigt. Man erkennt hier wieder die axiale Abstützung des Kraftbeaufschlagungselements 86f über den Drahtring 90f in der ersten axialen Richtung und über ein ringartiges Abstützelement 200f in der zweiten, entgegengesetzten axialen Richtung. Dieser Abstützring 200f weist an mehreren Umfangspositionen Befestigungsstege 202f auf, die in im Wesentlichen nach radial außen greifenden Befestigungsabschnitten 204f enden. Im Bereich dieser Befestigungsabschnitte 204f ist der Abstützring 200f mit dem Gehäuseteil 28f fest verbunden. Man erkennt in Fig. 10 und auch in Fig. 12, dass dieses Gehäuseteil 28f einen nach radial außen greifenden flanschartigen Befestigungsbereich 33f aufweist. Im Bereich dieses Befestigungsbereichs 33f ist unter Einsatz der Schraubbolzen 32f das Gehäuseteil 28f an der Widerlagerplatte 26f festgelegt. An mehreren Umfangspositionen ist dieser flanschartige Befestigungsbereich 33f jedoch axial zurückversetzt, um Abschnitte 35f zu bilden, in welchen Tangentialblattfedern 208f, die andernends an der Anpressplatte 72f festgelegt sind, mit dem Gehäuseteil 28f durch Vernietung o.dgl. verbunden sind. Zusammen mit den Tangentialblattfedern 208f ist dann der Abstützring 200f im Bereich seiner Befestigungsabschnitte 204f mit dem Gehäuseteil 28f fest verbunden.

Auch hier wird bei dem Zusammenfügen dieser Baugruppe vorzugsweise das Kraftbeaufschlagungselement 86f unter Vorspannung, also in seiner Einbaulage, gehalten, um einen exakten Einbau des Abstützrings 200f zu ermöglichen. Bei dieser Art des Einbaus kann ein ansonsten beim Verschweißen erforderlicher Wärmeeintrag vermieden werden, so dass auch die Gefahr des Verziehens des Gehäuseteils 28f praktisch nicht auftreten kann und überdies ein sehr kostengünstiger Aufbau geschaffen werden kann.

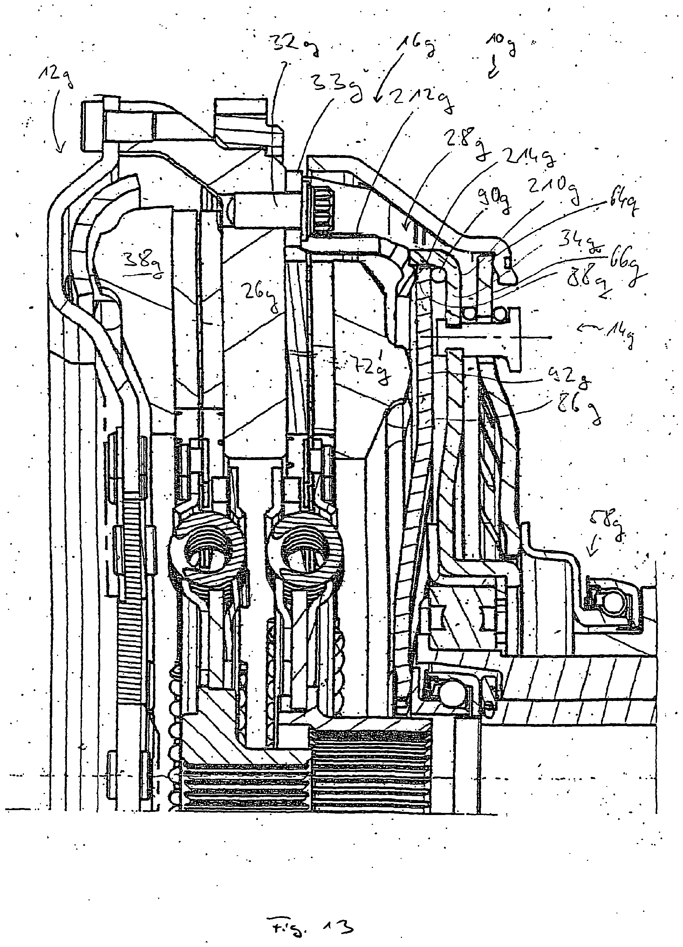

Eine weitere Variante ist in den Fig..13 - 17 gezeigt. Man erkennt zunächst in Fig. 13, dass das Gehäuseteil 28g zweigeteilt ist in ein erstes Gehäusebauteil 210g und ein zweites Gehäusebauteil 212g. Das zweite Gehäusebauteil 212g stellt wieder den nach radial außen greifenden flanschartigen Befestigungsbereich 33g bereit, in dessen Bereich unter Einsatz der Schraubbolzen 32g die Festlegung an der Widerlagerplatte 26g erfolgt. Ferner stellt dieses Gehäusebauteil 212g, das ebenfalls eine näherungsweise topfartige Struktur mit einem ringartig offenen Boden aufweist, einen Abstützbereich 214g bereit, an dem der radial äußere Bereich 88g des Kraftbeaufschlagungselements 86g in axialer Richtung abgestützt ist. Das zweite Gehäusebauteil 210g ist in seinem radial äußeren, umfangswandungsartig ausgestalteten Bereich mit dem Gehäusebauteil 212g in einem Bereich radial außerhalb des Kraftbeaufschlagungselements 86g verbunden, beispielsweise durch Verschweißung, Vernietung, Klemmsitz oder dergleichen. Dieses näherungsweise wiederum topfartig ausgestaltete Gehäusebauteil 210g stellt den Bodenbereich 34g bereit, an welchem der radial äußere Bereich 88g des Kraftbeaufschlagungselements 86g über den Drahtring 90g abgestützt ist.

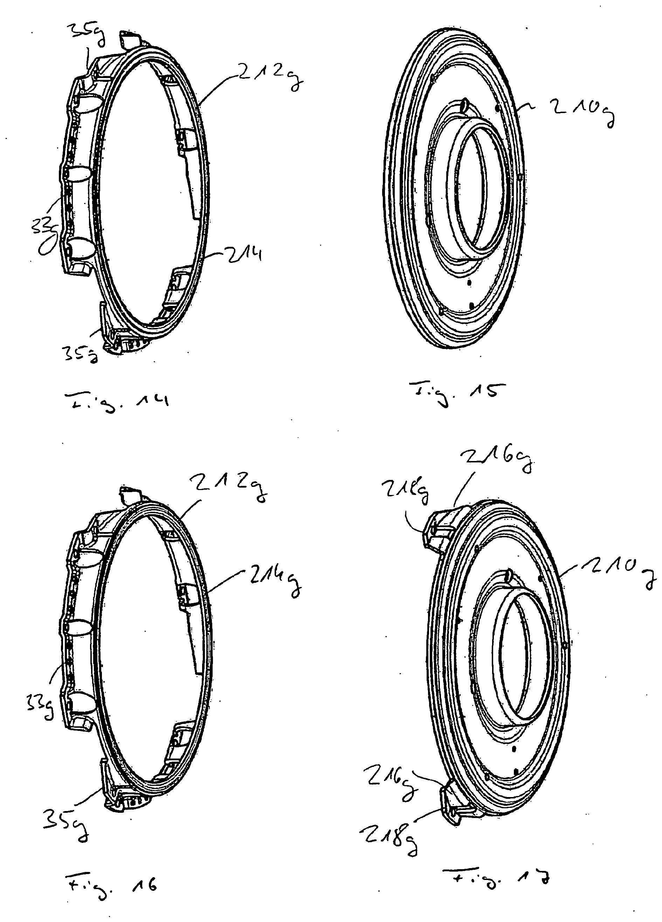

Bei dieser Ausgestaltungsvariante ist das Gehäusebauteil 212g bezüglich der Widerlagerplatte 26g zentriert, während das Gehäusebauteil 210g dann an dem Gehäusebauteil 212g getragen ist und somit ebenfalls in korrekter Art und Weise positioniert ist. Bei der in den Fig. 16 und 17 gezeigten Abwandlung dieser Ausgestaltungsvariante entspricht der Aufbau des Gehäusebauteils 212g dem auch in Fig. 14 bzw. in Fig. 13 Gezeigten. Das Gehäusebauteil 210g trägt Befestigungsbereiche 216g, die wiederum in Befestigungsabschnitten 218g enden. Im Bereich dieser Befestigungsabschnitte 218g kann das Gehäusebauteil 210g mit dem Gehäusebauteil 212g fest verbunden werden, beispielsweise durch Vernietung. Auch hier können wieder die gleichzeitig dann auch die Anbindung der Tangentialblattfedern bereitstellenden Niete zum Einsatz gelangen.

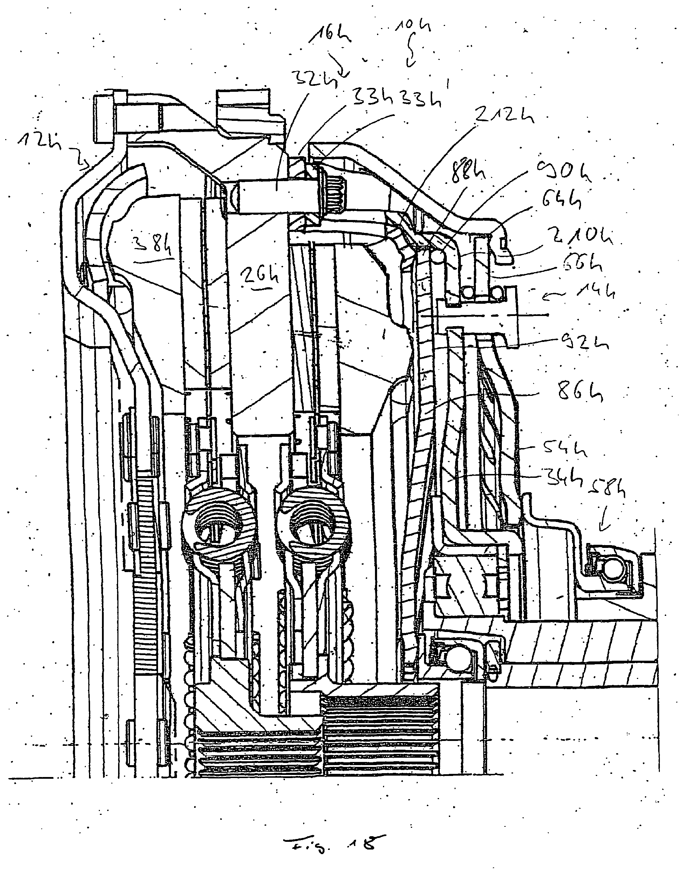

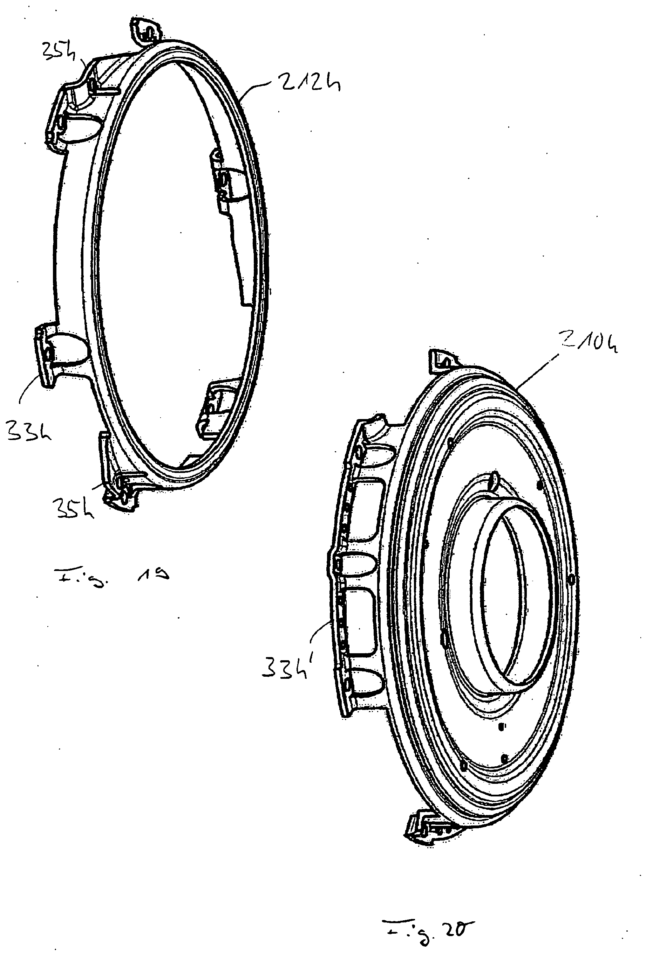

Eine weitere Variante ist in den Fig. 18 - 20 gezeigt. Auch hier kommen zwei Gehäusebauteile 212h und 210h zum Einsatz, zwischen welchen dann der radial äußere Bereich 88h des Kraftbeaufschlagungselements 86h axial fest und ohne Bewegungsspiel gehalten ist. Um eine verbesserte Zentrierung bezüglich der Widerlagerplatte 26h erlangen zu können, werden beide diese Gehäuseteile 21 0h, 212h über jeweilige daran vorgesehene Befestigungsbereiche 33h, 33h' unter Einsatz der Schraubbolzen 32h an der Widerlagerplatte 26h festgelegt. Somit ist für beide diese Gehäusebauteile 210h, 212h die Möglichkeit der Zentrierung bezüglich der Widerlagerplatte 26h gegeben. Primär ist jedoch darauf zu achten, dass das Gehäusebauteil 210h exakt zentriert ist, da dieses auch der weiteren Abstützung dient.

Bei den vorangehend beschriebenen Ausgestaltungsformen, die verschiedene ineinander eingesetzte und ggf. direkt miteinander verbundene oder über die Widerlagerplatte oder Befestigungsbolzen miteinander verbundene Gehäusebauteile verwenden, können diese Gehäusebauteile vorteilhafterweise aus Blechmaterial hergestellt werden, das nach einem Ausstanzvorgang durch einen Umformvorgang in die gewünschte Form gebracht werden. Die wesentlichen Vorteile der vorangehend mit Bezug auf die Fig. 6 - 20 beschriebenen Ausgestaltungsformen liegen darin, dass eine im Wesentlichen spielfreie beidseitige axiale Halterung der Membranfeder bzw. des Kraftbeaufschlagungselements erlangt wird, das in seinem radial äußeren Bereich bezüglich des Gehäuses abzustützen ist. Die Gefahr der bei Kraftbeaufschlagung erfolgenden Verformung derjenigen Bereiche, in welchen die axiale Abstützung erfolgt, ist durch die Möglichkeit, geeignet geformte und dimensionierte Bauteile einzusetzen, weitgehend vermieden.

Wie bereits angesprochen, können die Kraftbeaufschlagungselemente beispielsweise als Membranfedern ausgebildet sein, können jedoch beispielsweise auch eine Kraftübertragungshebelanordnung mit mehreren in Umfangsrichtung verteilt angeordneten Hebelelementen umfassen, welche gegebenenfalls auch in Richtung Auskuppeln vorgespannt sein können oder diesen zugeordnete Vorspannelemente aufweisen, welche die Hebelelemente in Richtung Auskuppeln vorspannen, solange ein Vorspannen der Kraftbeaufschlagungsanordnung möglich ist, um eine der am Beginn eines Einrückvorgangs wirksamen Einrückkraft entgegenwirkende Reaktionskraft bereitzustellen.

Vorzugsweise sind die vorangehend beschriebenen Kraftbeaufschlagungselemente so ausgebildet, dass sie lediglich zu Beginn eines Einrückvorgangs eine der wirksamen Einrückkraft entgegenwirkende Reaktionskraft bereitstellen, im übrigen aber im Wesentlichen nur geringe Reaktionskräfte bereitstellen, bevorzugt mit einem neutralen oder degressiven Kraft-Wegverhalten, um zwar das Startniveau der Einrückkraft anzuheben, jedoch nicht oder nur unwesentlich den Maximalwert der Einrückkraft, so dass eine Umgestaltung des Betätigungsmechanismus 58 zur Erzielung höherer Einrücckräfte (maximal erreichbare Einrückkräfte) nicht notwendig ist.

## Patentansprüche

1. Reibungskupplung, umfassend eine Gehäuseanordnung (16; 16a; 16b; 16c; 16d; 16e; 16f; 16g; 16h), eine Anpressplatte (38, 72; 38a, 72a; 38b, 72b; 38c, 72c; 72d; 72e; 72f; 72g; 72h), welche mit der Gehäuseanordnung (16; 16a; 16b; 16c; 16d; 16e; 16f; 16g; 16h) zur gemeinsamen Drehung um eine Drehachse (A) und in Richtung der Drehachse (A) bezüglich dieser verlagerbar gekoppelt ist, ein Einrückersystem (58; 58a; 58b; 58c; 58e; 58f; 58g; 58h) zur Erzeugung einer Einrückkraft, eine Kraftbeaufschlagungsanordnung (54, 86; 54a, 86a; 54b, 86b; 54c, 86c; 86d; 86e; 86f; 86g; 86h), welche bezüglich der Gehäuseanordung (16; 16a; 16b; 16c; 16d; 16e; 16f; 16g; 16h) in beiden axialen Richtungen abgestützt ist und welche bezüglich der Anpressplatte (38, 72; 38a, 72a; 38b, 72b; 38c, 72c; 72d; 72e; 72f; 72g; 72h) abgestützt ist und zur Übertragung der Einrückkraft auf die Anpressplatte (38, 72; 38a, 72a; 38b, 72b; 38c, 72c; 72d; 72e; 72f; 72g; 72h) durch das Einrückersystem (58; 58a; 58b; 58c; 58d; 58e; 58f; 58g; 58h) beaufschlagbar ist,
wobei die Kraftbeaufschlagungsanordnung (54, 86; 54a, 86a; 54b, 86b; 54c, 86c; 86d; 86e; 86f; 86g; 86h) in Richtung Auskuppeln vorgespannt ist, um eine der am Beginn eines Einrückvorgangs wirkenden Einrückkraft entgegenwirkende Reaktionskraft bereitzustellen,
wobei eine Kraftbeaufschlagungsanordnung (86; 86a; 86b; 86c; 86d; 86e; 86f; 86g; 86h) in ihrem radial äußeren Randbereich (88; 88a; 88b; 88c; 88d; 88e; 88f; 88g; 88h) bezüglich der Gehäuseanordnung (16; 16a; 16b; 16c; 16d; 16e; 16g; 16g; 16h) und in einem radial weiter innen gelegenen Bereich (92; 92a; 92b; 92c; 92d; 92e; 92f; 92g; 92h) bezüglich der Anpressplatte (72; 72a; 72b; 72c; 72d; 72e; 72f; 72g; 72h) abgestützt ist,
und/oder wobei eine Kraftbeaufschlagungsanordnung (54; 54a; 54b; 54c) in ihrem radial äußeren Randbereich (64; 64a; 64b; 64c) bezüglich der Anpressplatte (38; 38a; 38b; 38c) und in einem radial weiter innen gelegenen Bereich (66; 66a; 66b; 66c) bezüglich der Gehäuseanordnung (16; 16a; 16b; 16c; 16d) abgestützt ist.

2. Reibungskupplung nach Anspruch 1, **dadurch gekennzeichnet, dass** die Abstützung in einer ersten axialen Richtung über ein an einem Bodenbereich (34; 34a; 34b; 34c; 34d; 34e; 34f; 34g; 34h) des Gehäuses (16; 16a; 16b; 16c; 16d; 16e; 16f; 16g; 16h) sich abstützendes erstes Abstützelement (90; 90a; 90b; 90c; 90d; 90f; 90g; 90h) erfolgt.

3. Reibungskupplung nach einem der Ansprüche 1 oder 2, **dadurch gekennzeichnet, dass** die Abstützung in einer zweiten axialen Richtung über an dem Gehäuse (16; 16a; 16b; 16c) integral vorgesehene, durch Umformung des Gehäuses (16; 16a; 16b; 16c) gebildete Abstützbereiche (102; 102a; 102b; 102c) erfolgt.

4. Reibungskupplung nach einem der Ansprüche 1 bis 3, **dadurch gekennzeichnet, dass** die Abstützung in einer zweiten axialen Richtung über ein mit dem Gehäuse (16e; 16f) axial fest verbundenes zweites Abstützelement (200e; 200f) erfolgt.

5. Reibungskupplung nach Anspruch 4, **dadurch gekennzeichnet, dass** das zweite Abstützelement (200e; 200f) mit dem Gehäuse (16e; 16f) durch Formschluss, Materialschluss, insbesondere Verschweißung, oder unter Einsatz von Befestigungselementen fest verbunden ist.

6. Reibungskupplung nach Anspruch 1, **dadurch gekennzeichnet, dass** das Gehäuse (16g; 16h) ein erstes Gehäusebauteil (210g; 210h) umfasst, an dem die Abstützung in einer ersten axialen Richtung erfolgt, und ein zweites Gehäusebauteil (212g; 212h) umfasst, an dem die Abstützung in einer zweiten axialen Richtung erfolgt.

7. Reibungskupplung nach Anspruch 6, **dadurch gekennzeichnet, dass** das erste Gehäusebauteil (210g) an dem zweiten Gehäusebauteil (212g) getragen ist.

8. Reibungskupplung nach Anspruch 7 **dadurch gekennzeichnet, dass** das erste Gehäusebauteil (210h) und das zweite Gehäusebauteil (212h) an einem gemeinsamen Träger (26h) getragen sind.

9. Reibungskupplung nach einem der vorhergehenden Ansprüche, **dadurch gekennzeichnet, dass** die Kraftbeaufschlagungsanordnung (54, 86; 54a, 86a; 54b, 86b; 54c, 86c) in einem maximal entspannten Zustand durch eine Abstützung an einer Vorspannanschlaganordnung (100, 110; 112a, 116a; 98b, 100b; 98c, 100c) in einem Vorspannzustand gehalten ist.

10. Reibungskupplung nach Anspruch 9, **dadurch gekennzeichnet, dass** die Vorspannanschlaganordnung (100; 98b, 100b; 98c, 100c) vom Einrückersystem (58; 58b; 58c) gebildet ist.

11. Reibungskupplung nach Anspruch 9 oder 10, **dadurch gekennzeichnet, dass** die Vorspannanschlaganordnung (110; 112a, 116a) an der Gehäuseanordnung (16; 16a) vorgesehen ist.

12. Reibungskupplung nach einem der Ansprüche 1 bis 11, **dadurch gekennzeichnet, dass** die Vorspannanschlaganordnung (110; 116a) einen radial äußeren Randbereich (64; 64a) der Kraftbeaufschlagungsanordnung (54; 54a) abstützt.

13. Reibungskupplung nach einem der Ansprüche 1 bis 11, **dadurch gekennzeichnet, dass** die Vorspannanschlaganordnung (112a) in einem gegenüber dem äußeren Randbereich (88a) der Kraftbeaufschlagungsanordnung (86a) radial weiter innen gelegenen Bereich (92a) zur Abstützung vorgesehen ist.

14. Reibungskupplung nach einem der Ansprüche 12 oder 13, **dadurch gekennzeichnet, dass** die Abstützung innerhalb eines Bereichs (64; 64a, 92a) erfolgt, in welchem die Anpressplatte (38; 38a, 72a) an der Kraftbeaufschlagungsanordnung (54; 54a, 86a) abgestützt ist.

15. Reibungskupplung nach einem der vorhergehenden Ansprüche, **dadurch gekennzeichnet, dass** die Kraftbeaufschlagungsanordnung (54, 86; 54a, 86a; 54b, 86b; 54c, 86c; 86d) wenigstens ein Membranfederelement (54, 86; 54a, 86a; 54b, 86b; 54c, 86c; 86d) umfasst.

16. Reibungskupplung nach einem der vorhergehenden Ansprüche, **dadurch gekennzeichnet, dass** die Kraftbeaufschlagungsanordnung mehrere Hebelelemente umfasst, welche in Richtung Ausrücken vorgespannt sind.

17. Reibungskupplung nach Anspruch 16, **dadurch gekennzeichnet, dass** den Hebelelementen Vorspannelemente zugeordnet sind, welche die Hebelelemente in Richtung Ausrücken vorspannen.

18. Reibungskupplung nach einem der Ansprüche 1 bis 17, **dadurch gekennzeichnet, dass** zwei Kupplungsbereiche (12, 14; 12a, 14a; 12b, 14b; 12c, 14c; 12e, 14e; 12f, 14f; 12g, 14g; 12h, 14h) vorgesehen sind, wobei in einem der Kupplungsbereiche (14; 14a; 14b; 14c; 14e; 14f; 14g; 14h) die Kraftbeaufschlagungsanordnung 186; 86a; 86b; 86c) in einem radial äußeren Randbereich (88; 88a; 88b; 88c; 88e; 88f; 88g; 88h) bezüglich der Gehäuseanordnung (16; 16a; 16b; 16c; 16e; 16f; 16g; 16h) und in einem radial weiter innen gelegenen Bereich (92; 92a; 92b; 92c; 92e; 92f; 92g; 92h) bezüglich der Anpressplatte (72; 72a; 72b; 72c; 72d; 72e; 72f; 72g; 72h) abgestützt ist und wobei in dem anderen Kupplungsbereich (12; 12a; 12b; 12c; 12e; 12f; 12g; 12h) die Kraftbeaufschlagungsanordnung (54; 54a; 54b; 54c; 54e; 54f; 54g; 54h) in einem radial äußeren Randbereich (64; 64a; 64b; 64c; 64e; 64f; 64g; 64h) bezüglich der Anpressplatte (38; 38a; 38b; 38c; 38e; 38f; 38g; 38h) und in einem radial weiter innen gelegenen Bereich (66; 66a; 66b; 66c; 66e; 66f; 66g; 66h) bezüglich der Gehäuseanordnung (16; 16a; 16b; 16c; 16e; 16f; 16g; 16h) abgestützt ist.

## Claims

1. Friction clutch, comprising a housing arrangement (16; 16a; 16b; 16c; 16d; 16e; 16f; 16g; 16h), a pressure plate (38, 72; 38a, 72a; 38b, 72b; 38c, 72c; 72d; 72e; 72f; 72g; 72h) which is coupled to the housing arrangement (16; 16a; 16b; 16c; 16d; 16e; 16f; 16g; 16h) for conjoint rotation about an axis of rotation (A) and so as to be displaceable in relation thereto in the direction of the axis of rotation (A), an engagement system (58; 58a; 58b; 58c; 58e; 58f; 58g; 58h) for generating an engagement force, a force-applying arrangement (54, 86; 54a, 86a; 54b, 86b; 54c, 86c; 86d; 86e; 86f; 86g; 86h) which is supported in relation to the housing arrangement (16; 16a; 16b; 16c; 16d; 16e; 16f; 16g; 16h) in both axial directions and which is supported in relation to the pressure plate (38, 72; 38a, 72a; 38b, 72b; 38c, 72c; 72d; 72e; 72f; 72g; 72h) and which can be acted on by the engagement system (58; 58a; 58b; 58c; 58d; 58e; 58f; 58g; 58h) for the purposes of transmitting the engagement force to the pressure plate (38, 72; 38a, 72a; 38b, 72b; 38c, 72c; 72d; 72e; 72f; 72g; 72h),
wherein the force-applying arrangement (54, 86; 54a, 86a; 54b, 86b; 54c, 86c; 86d; 86e; 86f; 86g; 86h) is preloaded in a direction of clutch disengagement in order to provide a reaction force which counteracts the engagement force acting at the start of an engagement process,
wherein a force-applying arrangement (86; 86a; 86b; 86c; 86d; 86e; 86f; 86g; 86h) is supported, in its radially outer edge region (88; 88a; 88b; 88c; 88d; 88e; 88f; 88g; 88h), in relation to the housing arrangement (16; 16a; 16b; 16c; 16d; 16e; 16f; 16g; 16h) and is supported, in a radially further inwardly situated region (92; 92a; 92b; 92c; 92d; 92e; 92f; 92g; 92h), in relation to the pressure plate (72; 72a; 72b; 72c; 72d; 72e; 72f; 72g; 72h), and/or wherein a force-applying arrangement (54; 54a; 54b; 54c) is supported, in its radially outer edge region (64; 64a; 64b; 64c), in relation to the pressure plate (38; 38a; 38b; 38c) and is supported, in a radially further inwardly situated region (66; 66a; 66b; 66c), in relation to the housing arrangement (16; 16a; 16b; 16c; 16d).

2. Friction clutch according to Claim 1, **characterized in that** the support is provided in a first axial direction by means of a first support element (90; 90a; 90b; 90c; 90d; 90f; 90g; 90h) which is supported on a bottom region (34; 34a; 34b; 34c; 34d; 34e; 34f; 34g; 34h) of the housing (16; 16a; 16b; 16c; 16d; 16e; 16f; 16g; 16h).

3. Friction clutch according to either of Claims 1 and 2, **characterized in that** the support is provided in a second axial direction by means of support regions (102; 102a; 102b; 102c) which are provided integrally on the housing (16; 16a; 16b; 16c) and which are formed by deformation of the housing (16; 16a; 16b; 16c).

4. Friction clutch according to any of Claims 1 to 3, **characterized in that** the support is provided in a second axial direction by means of a second support element (200e; 200f) which is axially fixedly connected to the housing (16e; 16f).

5. Friction clutch according to Claim 4, **characterized in that** the second support element (200e; 200f) is fixedly connected with the housing (16e; 16f) by form fitting, material cohesion, in particular welding, or through the use of fastening elements.

6. Friction clutch according to Claim 1, **characterized in that** the housing (16g; 16h) comprises a first housing component (210g; 210h), on which the support is provided in a first axial direction, and a second housing component (212g; 212h), on which the support is provided in a second axial direction.

7. Friction clutch according to Claim 6, **characterized in that** the first housing component (210g) is carried on the second housing component (212g).

8. Friction clutch according to Claim 6, **characterized in that** the first housing component (210h) and the second housing component (212h) are carried on a common carrier (26h).

9. Friction clutch according to any of the preceding claims, **characterized in that** the force-applying arrangement (54, 86; 54a, 86a; 54b, 86b; 54c, 86c), in a state of maximum relaxation, is held in a preloaded state by a support on a preload stop arrangement (100, 110; 112a, 116a; 98b, 100b; 98c, 100c).

10. Friction clutch according to Claim 9, **characterized in that** the preload stop arrangement (100; 98b, 100b; 98c, 100c) is formed by the engagement system (58; 58b; 58c).

11. Friction clutch according to Claim 9 or 10, **characterized in that** the preload stop arrangement (110; 112a, 116a) is provided on the housing arrangement (16; 16a).

12. Friction clutch according to any of Claims 1 to 11, **characterized in that** the preload stop arrangement (110; 116a) supports a radially outer edge region (64; 64a) of the force-applying arrangement (54; 54a) .

13. Friction clutch according to any of Claims 1 to 11, **characterized in that** the preload stop arrangement (112a) is provided for support in a radially further inwardly situated region (92a) in relation to the outer edge region (88a) of the force-applying arrangement (86a).

14. Friction clutch according to either of Claims 12 and 13, **characterized in that** the support is provided within a region (64; 64a, 92a) in which the pressure plate (38; 38a, 72a) is supported on the force-applying arrangement (54; 54a, 86a).

15. Friction clutch according to any of the preceding claims, **characterized in that** the force-applying arrangement (54, 86; 54a, 86a; 54b, 86b; 54c, 86c; 86d) comprises at least one diaphragm spring element (54, 86; 54a, 86a; 54b, 86b; 54c, 86c; 86d).

16. Friction clutch according to any of the preceding claims, **characterized in that** the force-applying arrangement comprises multiple lever elements which are preloaded in a disengagement direction.

17. Friction clutch according to Claim 16, **characterized in that** the lever elements are assigned preload elements which preload the lever elements in a disengagement direction.

18. Friction clutch according to any of Claims 1 to 17, **characterized in that** two clutch regions (12, 14; 12a, 14a; 12b, 14b; 12c, 14c; 12e, 14e; 12f, 14f; 12g, 14g; 12h, 14h) are provided, wherein, in one of the clutch regions (14; 14a; 14b; 14c; 14e; 14f; 14g; 14h), the force-applying arrangement (86; 86a; 86b; 86c) is supported, in a radially outer edge region (88; 88a; 88b; 88c; 88e; 88f; 88g; 88h), in relation to the housing arrangement (16; 16a; 16b; 16c; 16e; 16f; 16g; 16h) and is supported, in a radially further inwardly situated region (92; 92a; 92b; 92c; 92e; 92f; 92g; 92h), in relation to the pressure plate (72; 72a; 72b; 72c; 72d; 72e; 72f; 72g; 72h), and wherein, in the other clutch region (12; 12a; 12b; 12c; 12e; 12f; 12g; 12h), the force-applying arrangement (54; 54a; 54b; 54c; 54e; 54f; 54g; 54h) is supported, in a radially outer edge region (64; 64a; 64b; 64c; 64e; 64f; 64g; 64h), in relation to the pressure plate (38; 38a; 38b; 38c; 38e: 38f; 38g; 38h) and is supported, in a radially further inwardly situated region (66; 66a; 66b; 66c; 66e; 66f; 66g; 66h), in relation to the housing arrangement (16; 16a; 16b; 16c; 16e; 16f; 16g; 16h).

## Revendications

1. Embrayage à friction, comprenant un agencement de carter (16 ; 16a ; 16b ; 16c ; 16d ; 16e ; 16f ; 16g ; 16h), un plateau de pression (38, 72 ; 38a, 72a ; 38b, 72b ; 38c, 72c ; 72d ; 72e ; 72f ; 72g ; 72h), qui est couplé avec l'agencement de carter (16 ; 16a ; 16b ; 16c ; 16d ; 16e ; 16f ; 16g ; 16h) pour la rotation commune autour d'un axe de rotation (A) et de manière déplaçable dans la direction de l'axe de rotation (A) par rapport à celui-ci, un système embrayeur (58 ; 58a ; 58b ; 58c ; 58e ; 58f ; 58g ; 58h) pour la génération d'une force d'embrayage, un agencement d'application de force (54, 86 ; 54a, 86a ; 54b, 86b ; 54c, 86c ; 86d ; 86e ; 86f ; 86g ; 86h), qui est soutenu dans les deux directions axiales par rapport à l'agencement de carter (16 ; 16a ; 16b ; 16c ; 16d ; 16e ; 16f ; 16g ; 16h) et qui est soutenu par rapport au plateau de pression (38, 72 ; 38a, 72a ; 38b, 72b ; 38c, 72c ; 72d ; 72e ; 72f ; 72g ; 72h) et
qui peut être appliqué pour le transfert de la force d'embrayage au plateau de pression (38, 72 ; 38a, 72a ; 38b, 72b ; 38c, 72c ; 72d ; 72e ; 72f ; 72g ; 72h) par le système embrayeur (58 ; 58a ; 58b ; 58c ; 58d ; 58e ; 58f ; 58g ; 58h),
l'agencement d'application de force (54, 86 ; 54a, 86a ; 54b, 86b ; 54c, 86c ; 86d ; 86e ; 86f ; 86g ; 86h) étant précontraint dans la direction du découplage, afin de mettre en place une force de réaction contrant la force d'embrayage agissant au début d'un processus d'embrayage,
un agencement d'application de force (86 ; 86a ; 86b ; 86c ; 86d ; 86e ; 86f ; 86g ; 86h) étant soutenu dans sa zone de bord radialement extérieure (88 ; 88a ; 88b ; 88c ; 88d ; 88e ; 88f ; 88g ; 88h) par rapport à l'agencement de carter (16 ; 16a ; 16b ; 16c ; 16d ; 16e ; 16g ; 16g ; 16h) et dans une zone située radialement plus à l'intérieur (92 ; 92a ; 92b ; 92c ; 92d ; 92e ; 92f ; 92g ; 92h) par rapport au plateau de pression (72 ; 72a ; 72b ; 72c ; 72d ; 72e ; 72f ; 72g ; 72h),
et/ou un agencement d'application de force (54 ; 54a ; 54b ; 54c) étant soutenu dans sa zone de bord radialement extérieure (64 ; 64a ; 64b ; 64c) par rapport au plateau de pression (38 ; 38a ; 38b ; 38c) et dans une zone située radialement plus à l'intérieur (66 ; 66a ; 66b ; 66c) par rapport à l'agencement de carter (16 ; 16a ; 16b ; 16c ; 16d).

2. Embrayage à friction selon la revendication 1, **caractérisé en ce que** le soutien dans une première direction axiale a lieu par l'intermédiaire d'un premier élément de soutien (90 ; 90a ; 90b ; 90c ; 90d ; 90f ; 90g ; 90h) qui est soutenu sur une zone de fond (34 ; 34a ; 34b ; 34c ; 34d ; 34e ; 34f ; 34g ; 34h) du carter (16 ; 16a ; 16b ; 16c ; 16d ; 16e ; 16f ; 16g ; 16h).

3. Embrayage à friction selon l'une quelconque des revendications 1 ou 2, **caractérisé en ce que** le soutien dans une deuxième direction axiale a lieu par l'intermédiaire de zones de soutien (102 ; 102a ; 102b ; 102c) formées par déformation du carter (16 ; 16a ; 16b ; 16c), prévues d'un seul tenant sur le carter (16 ; 16a ; 16b ; 16c).

4. Embrayage à friction selon l'une quelconque des revendications 1 à 3, **caractérisé en ce que** le soutien dans une deuxième direction axiale a lieu par l'intermédiaire d'un deuxième élément de soutien (200e ; 200f) relié de manière fixe axialement avec le carter (16e ; 16f).

5. Embrayage à friction selon la revendication 4, **caractérisé en ce que** le deuxième élément de soutien (200e ; 200f) est relié de manière fixe avec le carter (16e ; 16f) par accouplement de forme, accouplement de matière, notamment soudure, ou en utilisant des éléments de fixation.

6. Embrayage à friction selon la revendication 1, **caractérisé en ce que** le carter (16g ; 16h) comprend un premier composant de carter (210g ; 210h), sur lequel le soutien dans une première direction axiale a lieu, et un deuxième composant de carter (212g ; 212h), sur lequel le soutien dans une deuxième direction axiale a lieu.

7. Embrayage à friction selon la revendication 6, **caractérisé en ce que** le premier composant de boîtier (210g) est supporté sur le deuxième composant de boîtier (212g).

8. Embrayage à friction selon la revendication 6, **caractérisé en ce que** le premier composant de boîtier (210h) et le deuxième composant de boîtier (212h) sont supportés sur un support commun (26h).

9. Embrayage à friction selon l'une quelconque des revendications précédentes, **caractérisé en ce que**, dans un état de détente maximale, l'agencement d'application de force (54, 86 ; 54a, 86a ; 54b, 86b ; 54c, 86c) est maintenu dans un état de précontrainte par un soutien sur un agencement de butée de précontrainte (100, 110 ; 112a, 116a ; 98b, 100b ; 98c, 100c).

10. Embrayage à friction selon la revendication 9, **caractérisé en ce que** l'agencement de butée de précontrainte (100 ; 98b, 100b ; 98c, 100c) est formé par le système embrayeur (58 ; 58b ; 58c).

11. Embrayage à friction selon la revendication 9 ou 10, **caractérisé en ce que** l'agencement de butée de précontrainte (110 ; 112a, 116a) est prévu sur l'agencement de carter (16 ; 16a).

12. Embrayage à friction selon l'une quelconque des revendications 1 à 11, **caractérisé en ce que** l'agencement de butée de précontrainte (110 ; 116a) soutient une zone de bord radialement extérieure (64 ; 64a) de l'agencement d'application de force (54 ; 54a).

13. Embrayage à friction selon l'une quelconque des revendications 1 à 11, **caractérisé en ce que** l'agencement de butée de précontrainte (112a) est prévu pour le soutien dans une zone située radialement plus à l'intérieur (92a) par rapport à la zone de bord extérieure (88a) de l'agencement d'application de force (86a).

14. Embrayage à friction selon l'une quelconque des revendications 12 ou 13, **caractérisé en ce que** le soutien a lieu à l'intérieur d'une zone (64 ; 64a, 92a), dans laquelle le plateau de pression (38 ; 38a, 72a) est soutenu sur l'agencement d'application de force (54 ; 54a, 86a).

15. Embrayage à friction selon l'une quelconque des revendications précédentes, **caractérisé en ce que** l'agencement d'application de force (54, 86 ; 54a, 86a ; 54b, 86b ; 54c, 86c ; 86d) comprend au moins un élément ressort à membrane (54, 86 ; 54a, 86a ; 54b, 86b ; 54c, 86c ; 86d).

16. Embrayage à friction selon l'une quelconque des revendications précédentes, **caractérisé en ce que** l'agencement d'application de force comprend plusieurs éléments leviers, qui sont précontraints dans la direction du débrayage.

17. Embrayage à friction selon la revendication 16, **caractérisé en ce que** des éléments de précontrainte sont associés aux éléments leviers, qui précontraignent les éléments leviers dans la direction du débrayage.

18. Embrayage à friction selon l'une quelconque des revendications 1 à 17, **caractérisé en ce que** deux zones d'embrayage (12, 14 ; 12a, 14a ; 12b, 14b ; 12c, 14c ; 12e, 14e ; 12f, 14f ; 12g, 14g ; 12h, 14h) sont prévues, dans une des zones d'embrayage (14 ; 14a ; 14b ; 14c ; 14e ; 14f ; 14g ; 14h), l'agencement d'application de force (186 ; 86a ; 86b ; 86c) étant soutenu dans une zone de bord radialement extérieure (88 ; 88a ; 88b ; 88c ; 88e ; 88f ; 88g ; 88h) par rapport à l'agencement de carter (16 ; 16a ; 16b ; 16c ; 16e ; 16f ; 16g ; 16h) et dans une zone située radialement plus à l'intérieur (92 ; 92a ; 92b ; 92c ; 92e ; 92f ; 92g ; 92h) par rapport au plateau de pression (72 ; 72a ; 72b ; 72c ; 72d ; 72e ; 72f ; 72g ; 72h) et, dans l'autre zone d'embrayage (12 ; 12a ; 12b ; 12c ; 12e ; 12f ; 12g ; 12h), l'agencement d'application de force (54 ; 54a ; 54b ; 54c ; 54e ; 54f ; 54g ; 54h) étant soutenu dans une zone de bord radialement extérieure (64 ; 64a ; 64b ; 64c ; 64e ; 64f ; 64g ; 64h) par rapport au plateau de pression (38 ; 38a ; 38b ; 38c ; 38e ; 38f ; 38g ; 38h) et dans une zone située radialement plus à l'intérieur (66 ; 66a ; 66b ; 66c ; 66e ; 66f ; 66g ; 66h) par rapport à l'agencement de carter (16 ; 16a ; 16b ; 16c ; 16e ; 16f ; 16g ; 16h).
